# EUROPEAN PATENT SPECIFICATION

(11) **EP 1 701 876 B1**
(45) Date of publication and mention of the grant of the patent: **19.09.2007**
(21) Application number: 04805202.1
(22) Date of filing: 29.12.2004
(51) Int. Cl.: B62J 6/20

(54) **SPOKE REFLECTOR**
SPEICHENREFLEKTOR
REFLECTEUR POUR RAYON

(30) Priority: 30.12.2003 FI 20030492 U
(43) Date of publication of application: 20.09.2006
(73) Proprietor: Herrmans Oy Ab., 68601 Pietarsaari (FI)
(72) Inventor: BYGGMÄSTAR, Klas, FI-68580 Furuholmen (FI)
(74) Representative: Tanhua, Pekka Vilhelm
(86) International application number: PCT/FI2004/000807
(87) International publication number: WO 2005/063556

(56) References cited:
- DE-A1- 3 234 133
- DE-A1- 4 434 672
- DE-A1- 19 638 610
- US-A- 4 575 789

## Description

This invention relates to a spoke reflector to be placed on the spokes of a bicycle and consisting of a reflector body with a larger lug and a smaller lug placed at each end, respectively. Document DE-A-32 34 133 shows a spoke reflector comprising lugs, the spoke being received between two lugs provided with dents at the center thereof and at both edges thereof, respectively.

In prior art spoke reflectors, it has been difficult to mount and release the reflector because of the stiff fixing lugs. Prior art reflectors have not either comprised projections for retaining the spoke more firmly, with the spoke solidly fixed between dents of the grooves provided in the projections. Prior art spoke reflectors have also required the use of more complex fixing means, in which the attachment has required e.g. clamping of the fixing lugs with a screw or the like on both sides of the spoke.

The spoke reflector of the invention is characterised by side grooves provided on both sides of the larger lug so that the lug edges become flexible, and by a dented projection provided at both edges of the larger lug, and by a dented projection provided at the centre of the smaller lug. The spoke reflector of the invention has a design such that facilitates the mounting and the release of the reflector. In addition, the design enables the spoke reflector of the invention to be fixed to spokes of varying thickness.

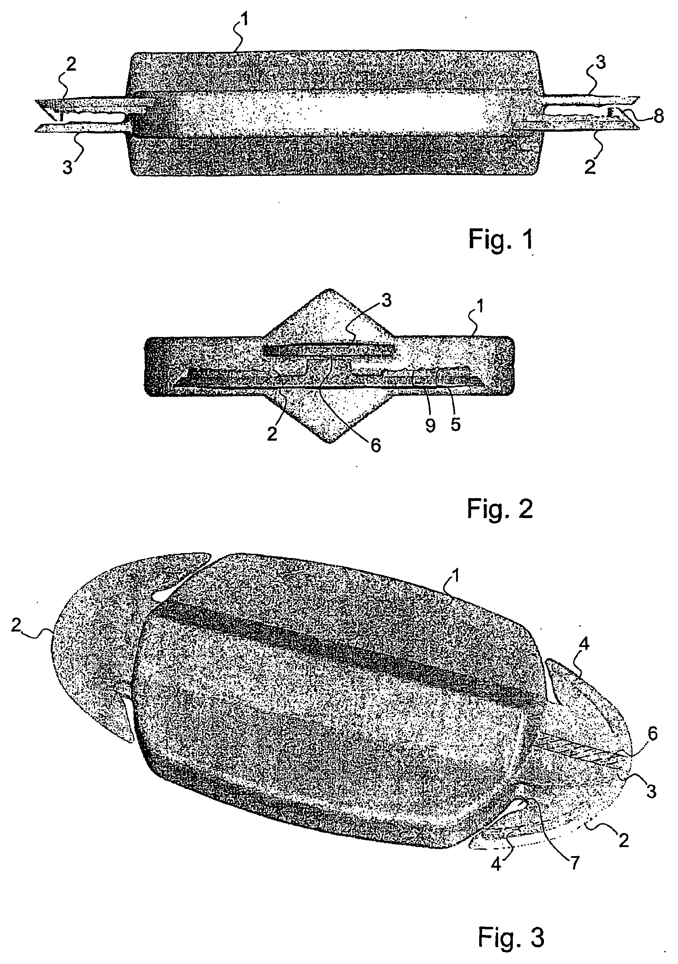

The invention will be explained in greater detail below with reference to the accompanying drawings, in which
Figure 1 is a side view of the spoke reflector of the invention.
Figure 2 is a side view of the end of the spoke reflector of the invention,
Figure 3 is an oblique top view of the spoke reflector of the invention, and

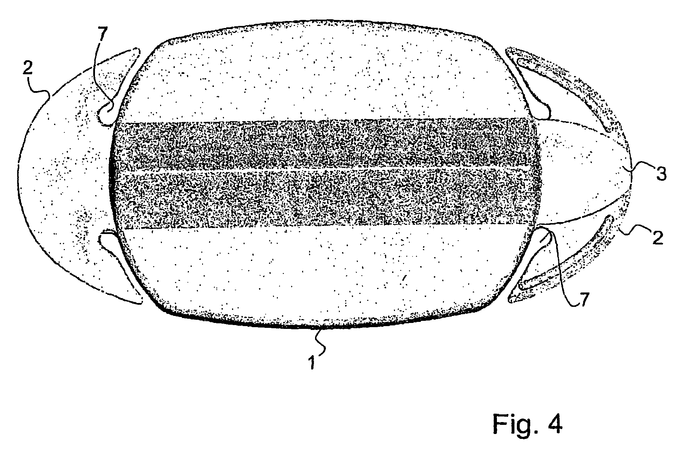

Figure 4 is a top view of the spoke reflector of the invention.

The invention relates to a spoke reflector, in which fixing lugs have been attached to both ends of the reflector body 1, the lugs comprising a smaller lug 3 and a larger lug 2, with the spoke accommodated between these lugs. The larger lug 2 has lateral grooves 7 on both sides and the larger lug also has a projection 4 with dents 5 at both edges, a projection 6 with dents 5 being provided at the centre of the smaller lug 3.

The lugs 2, 3 provided at opposite ends of the reflector body 1 are attached to form mirror images of one another.

The lateral grooves 7 make the edges of the larger lug 2 flexible.

The spoke is received in the grooves 9 provided in the projections 4, 6 of the larger lug 2 and the smaller lug 3, respectively.

The designs of the larger lug and the smaller lug 3, respectively, allow the reflector to be fixed to spokes of varying thickness.

A claw 8 has been fixed at the centre of the outer edge of the larger lug 2 to ensure that the spoke is retained in position.

The most advantageous embodiments of the invention have been described above. However, the invention is not confined to these alone, but may vary within the scope of the claims.

## Claims

1. A spoke reflector comprising fixing lugs attached at each end of the reflector body (1) and including a smaller lug (3) and a larger lug (2), the spoke being received between these lugs when mounted, wherein lateral grooves (7) are provided on both sides of the larger lug (2) and a dented projection (4) is provided at both edges of the larger lug (2) and a projection (6) with dents (5) is provided at the centre of the smaller lug (3).

2. A spoke reflector as defined in claim 1, **characterised in that** the lugs (2, 3) provided at opposite ends of the projector body (1) are fixed so as to form mirror images of each other.

3. A spoke reflector as defined in claim 1, **characterised in that** the edges of the larger lug (2) become flexible owing to the lateral grooves (7).

4. A spoke reflector as defined in claim 1, **characterised in that** the spoke is received in the grooves (9) provided in the projections (4, 6) of the larger lug (2) and the smaller lug (3), respectively.

5. A spoke reflector as defined in claim 1, **characterised in that** the designs of the larger lug and the smaller lug, respectively, enable the reflector to be fixed to spokes of varying thickness.

6. A spoke reflector as defined in claim 1, **characterised in that** a claw (8) has been fixed at the centre of the outer edge of the larger lug to ensure that the spoke is retained in position.

## Patentansprüche

1. Speichenreflektor, welcher an jedem Ende des Reflektorkörpers (1) angebrachte Befestigungsbügel umfasst und welcher einen kleineren Bügel (3) und einen größeren Bügel (2) umfasst, wobei die Speiche im Anbringungszustand zwischen diesen Bügeln aufgenommen ist, wobei seitliche Aussparungen (7) an beiden Seiten des größeren Bügels (2) vorgesehen sind und wobei ein gezahnter Überstand (4) an beiden Rändern des größeren Bügels (2) und ein Überstand (6) mit Zähnen (5) in der Mitte des kleineren Bügels (3) vorgesehen ist.

2. Speichenreflektor nach Anspruch 1, **dadurch gekennzeichnet, dass** die an gegenüber liegenden Enden des Reflektorkörpers (1) vorgesehenen Bügel (2, 3) derart befestigt sind, dass sie zueinander spiegelbildlich sind.

3. Speichenreflektor nach Anspruch 1, **dadurch gekennzeichnet, dass** die Ränder des größeren Bügels (2) aufgrund der seitlichen Aussparungen (7) flexibel werden.

4. Speichenreflektor nach Anspruch 1, **dadurch gekennzeichnet, dass** die Speiche in den Aussparungen (9) aufgenommen ist, welche in den Überständen (4, 6) des größeren Bügels (2) beziehungsweise des kleineren Bügels (3) vorgesehen sind.

5. Speichenreflektor nach Anspruch 1, **dadurch gekennzeichnet, dass** die Ausbildungen des größeren Bügels beziehungsweise des kleineren Bügels ermöglichen, dass der Reflektor an Speichen unterschiedlicher Dicke befestigt wird.

6. Speichenreflektor nach Anspruch 1, **dadurch gekennzeichnet, dass** eine Klaue (8) an der Mitte des äußeren Rands des größeren Bügels befestigt worden ist, um sicherzustellen, dass die Speiche in ihrer Position gehalten wird.

## Revendications

1. Réflecteur pour rayon comprenant des étriers de fixation fixés à chaque extrémité du corps de réflecteur (1) et comprenant un petit étrier (3) et un grand étrier (2), le rayon étant reçu entre ces étriers lorsqu'il est monté, dans lequel des rainures latérales (7) sont présentes des deux côtés du grand étrier (2) et une saillie entaillée (4) est présente aux deux bords du grand étrier (2) et une saillie (6) avec des creux (5) est présente au centre du petit étrier (3).

2. Réflecteur pour rayon selon la revendication 1, **caractérisé en ce que** les étriers (2, 3) situés aux extrémités opposées du corps de projecteur (1) sont fixés de façon à former des images à symétrie de miroir l'un par rapport à l'autre.

3. Réflecteur pour rayon selon la revendication 1, **caractérisé en ce que** les bords du grand étrier (2) deviennent souples grâce aux rainures latérales (7).

4. Réflecteur pour rayon selon la revendication 1, **caractérisé en ce que** le rayon est reçu dans les rainures (9) présentes dans les saillies (4, 6) du grand étrier (2) et du petit étrier (3), respectivement.

5. Réflecteur pour rayon selon la revendication 1, **caractérisé en ce que** les configurations du grand étrier et du petit étrier, respectivement, permettent au réflecteur d'être fixé à des rayons d'épaisseur variable.

6. Réflecteur pour rayon selon la revendication 1, **caractérisé en ce qu'**une mâchoire (8) a été fixée au centre du bord extérieur du grand étrier pour assurer que le rayon soit maintenu en position.
